(19) Europäisches Patentamt
European Patent Office
Office européen des brevets

(11) EP 2 952 492 A1

(12) **EUROPÄISCHE PATENTANMELDUNG**

(43) Veröffentlichungstag:
**09.12.2015 Patentblatt 2015/50**

(51) Int Cl.:
***C04B 28/02*** *(2006.01)* ***C04B 40/00*** *(2006.01)*

(21) Anmeldenummer: **14171521.9**

(22) Anmeldetag: **06.06.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF SE**
**67056 Ludwigshafen (DE)**

(72) Erfinder:
- **Bichler, Manfred**
**84549 Engelsberg (DE)**
- **Gädt, Torben**
**83278 Traunstein (DE)**
- **Loges, Niklas**
**83132 Pittenhart (DE)**
- **Mazanec, Oliver**
**83022 Rosenheim (DE)**
- **Hesse, Christoph**
**85560 Ebersberg (DE)**

(74) Vertreter: **Gastner, Thomas**
**BASF Construction Solutions GmbH**
**Abteilung GVX/DT**
**Dr.-Albert-Frank-Straße 32**
**83308 Trostberg (DE)**

(54) **Zusammensetzung auf Basis von Calciumsilikat-Hydrat**

(57) Die Erfindung betrifft eine Zusammensetzung umfassend 5 - 50 Gew.-% Calciumsilikat-Hydrat, 10 - 60 Gew.-% mindestens eines wasserlöslichen, säuregruppenhaltigen Polymers, umfassend Polyethergruppen und 5 - 40 Gew.-% mindestens eines Polyalkylenglycolethers. Weiterhin wird ein Verfahren zur Herstellung dieser Zusammensetzung sowie zementäre Mischungen umfassend die Zusammensetzung offenbart. Ein weitere Aspekt der vorliegenden Erfindung ist die Verwendung der erfindungsgemäßen Zusammensetzung in zementären Mischungen, zur Beschleunigung der zeitlichen Entfaltung der dispergierenden Wirkung des säuregruppenhaltigen Polymers nach Zugabe des Anmachwassers und einer nachfolgend beschleunigten Härtung der Mischung.

EP 2 952 492 A1

**Beschreibung**

Die Erfindung betrifft eine Zusammensetzung auf Basis von Calciumsilikat-Hydrat, mindestens einem wasserlöslichen, säuregruppenhaltigen Polymer, umfassend Polyethergruppen und mindestens einen Polyalkylenglycolether. Weiterhin werden ein Verfahren zur Herstellung dieser Zusammensetzung sowie zementäre Mischungen umfassend die Zusammensetzung offenbart. Ein weiterer Aspekt der vorliegenden Erfindung ist die Verwendung der erfindungsgemäßen Zusammensetzung in zementären Mischungen, zur Beschleunigung der zeitlichen Entfaltung der dispergierenden Wirkung des säuregruppenhaltigen Polymers nach Zugabe des Anmachwassers und einer nachfolgend beschleunigten Härtung der Mischung.

Um eine verbesserte Verarbeitbarkeit, d. h. Knetbarkeit, Streichfähigkeit, Spritzbarkeit, Pumpbarkeit oder Fließfähigkeit, anorganischer Feststoffsuspensionen zu erreichen, werden diesen oft Zusatzmittel in Form von Dispergier- oder Fließmitteln zugesetzt.

Derartige anorganische Feststoffe umfassen in der Bauindustrie meistens anorganische Bindemittel wie z.B. Zement auf Basis Portlandzement (EN 197), Zement mit besonderen Eigenschaften (DIN 1164), Weißzement, Calciumaluminatzement bzw. Tonerdezement (EN 14647), Calciumsulfoaluminatzement, Spezialzemente, Calciumsulfat-n-Hydrat (n=0 bis 2), Kalk bzw. Baukalk (EN 459) sowie Puzzolane bzw. latent hydraulische Bindemittel wie z. B. Flugasche, Metakaolin, Silicastaub, Hüttensand. Weiterhin enthalten die anorganischen Feststoffsuspensionen in der Regel Füllstoffe, insbesondere Gesteinskörnung bestehend aus z. B. Calciumcarbonat, Quarz oder anderen natürlichen Gesteinen verschiedener Korngröße und Kornform sowie weitere anorganische und/oder organische Additive (Zusatzmittel) zur gezielten Beeinflussung von Eigenschaften bauchemischer Produkte z. B. Hydratationskinetik, Rheologie oder Luftgehalt. Außerdem können organische Bindemittel wie z. B. Latexpulver enthalten sein.

Um Baustoffmischungen, insbesondere auf Basis von anorganischen Bindemitteln in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu einer signifikant verschlechterten mechanischen Festigkeit, Beständigkeit und Dauerhaftigkeit.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen in der Bauchemie als Wasserreduktions- oder Fließmittel bezeichnet werden. Als derartige Mittel sind vor allem Polykondensationsprodukte auf Basis von Naphthalin- oder Alkylnaphthalinsulfonsäuren bzw. Sulfonsäuregruppen enthaltende Melamin-Formaldehydharze bekannt.

DE 3530258 beschreibt die Verwendung von wasserlöslichen Natriumnaphthalinsulfonsäure-Formaldehydkondensaten als Zusatzmittel für anorganische Bindemittel und Baustoffe. Diese Zusatzmittel werden zur Verbesserung der Fließfähigkeit der Bindemittel wie z. B. Zement, Anhydrit oder Gips sowie den damit hergestellten Baustoffen beschrieben.

DE 2948698 beschreibt hydraulische Mörtel für Estriche, die Fließmittel auf Basis von Melamin-Formaldehyd-Kondensationsprodukten und/oder sulfonierte Formaldehyd-Naphthalinkondensate und/oder Ligninsulfonat und als Binder Portlandzement, tonhaltiger Kalkmergel, Ton- und Schwachbrandklinker enthalten.

Neben den rein anionischen Fließmitteln, die im wesentlichen Carbonsäure- und Sulfonsäuregruppen enthalten, werden als neuere Gruppe von Fließmitteln schwach anionische Kammpolymere beschrieben, die üblicherweise anionische Ladungen an der Hauptkette tragen und nichtionische Polyalkylenoxidseitenketten enthalten. Diese Copolymere werden auch als Polycarboxylatether (PCE) bezeichnet.

Polycarboxylatether dispergieren die anorganischen Partikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenoxid-Seitenketten, die durch Absorption von Wassermolekülen eine stabilisierende Schutzschicht um die Partikel bilden. Dadurch kann entweder die benötige Menge Wasser für das Einstellen einer bestimmten Konsistenz gegenüber den klassischen Fließmitteln reduziert werden oder aber die Plastizität der feuchten Baustoffmischung wird durch die Zugabe der Polycarboxylatether so weit reduziert, dass selbstverdichtender Beton oder selbstverdichtender Mörtel bei niedrigen Wasser/Zement-Verhältnissen hergestellt werden kann. Auch ermöglicht die Verwendung der Polycarboxylatether die Herstellung von Transportbeton oder Transportmörtel, der über längere Zeiträume pumpbar bleibt oder die Herstellung von hochfesten Betonen oder hochfesten Mörteln durch die Einstellung eines niedrigen Wasser/Zement-Verhältnisses.

WO 01/96007 beschreibt diese schwach anionischen Fließ- und Mahlhilfsmittel für wässrige Mineralsuspensionen, die durch radikalische Polymerisation von Vinylgruppen enthaltenden Monomeren hergestellt werden und die als eine Hauptkomponente Polyalkylenoxidgruppen enthalten.

DE 19513126 und DE 19834173 beschreiben Copolymere auf Basis von ungesättigten Dicarbonsäurederivaten und Oxyalkylenglycol-Alkenylethern und deren Verwendung als Zusatzmittel für hydraulische Bindemittel, insbesondere Zement.

Neben den beschriebenen Polycarboxylatethern sind inzwischen auch eine Reihe von Derivaten mit modifiziertem Wirkungsprofil bekannt. So beschreibt beispielsweise die US 2009312460 Polycarboxylatester, wobei die Esterfunktion nach Einbringen in eine zementäre, wässrige Mischung hydrolysiert wird und hierdurch ein Polycarboxylatether gebildet wird. Polycarboxylatester haben den Vorteil, dass sie ihre Wirkung erst nach einiger Zeit in der zementären Mischung entfalten und hierdurch die dispergierende Wirkung über einen längeren Zeitraum aufrechterhalten werden kann.

Weiterhin sind aus der DE 199 05 488 pulverförmige Polymerzusammensetzungen auf Basis von Polyethercarboxylaten bekannt, wobei diese 5 bis 95 Gew.-% des wasserlöslichen Polymers und 5 bis 95 Gew.-% eines feinteiligen mineralischen Trägermaterials umfassen. Die Produkte werden durch in Kontakt bringen des mineralischen Trägermaterials mit einer Schmelze oder einer wässrigen Lösung des Polymers hergestellt. Als Vorteile dieses Produktes wird im Vergleich zu sprühgetrockneten Produkten eine deutlich erhöhte Verklebungs- und Verbackungsresistenz genannt.

Aus der WO 2006/027363 ist ein Verfahren zur Herstellung eines beschichteten Grundstoffs für eine hydraulische Zusammensetzung bekannt. In den Beispielen wird unter anderem die Beschichtung eines Portlandzements mit 1 % einer wässrigen Polycarboxylatether-Lösung, bezogen auf das Bindemittelgewicht, offenbart.

Eine weitere Verbindungsklasse von Dispergiermitteln mit Polyetherseitenketten wird in der WO 2006/042709 beschrieben. Hierbei handelt es sich um Polykondensationprodukte auf Basis einer aromatischen oder heteroaromatischen Verbindung (A) mit 5 bis 10 C-Atomen bzw. Heteroatomen mit mindestens einem Oxyethylen- oder Oxypropylen-Rest und einem Aldehyd (C) ausgewählt aus der Gruppe Formaldehyd, Glyoxylsäure und Benzaldehyd oder Mischungen davon beschriebe, welche eine sehr gute verflüssigende Wirkung von anorganischen Bindemittel-Suspensionen bewirken und diesen Effekt über einen längeren Zeitraum aufrechterhalten. In einer besonderen Ausführungsform kann es sich hierbei um phosphatierte Polkondensationsprodukten handeln.

Es hat sich gezeigt, dass Fließmittel auf Basis von Ligninsulfonat, Melaminsulfonat und Polynaphthalinsulfonat den schwach anionischen, polyalkylenoxidhaltigen Copolymeren und den in der WO 2006/042709 beschrieben Kondensationsprodukten in ihrer Wirksamkeit deutlich unterlegen sind.

Dispergiermittel auf Basis von Polycarboxylatethern und deren Derivate sowie die in der WO 2006/042709 beschrieben Kondensationsprodukten werden entweder als Feststoff in Pulverform oder als wässrige Lösung angeboten. Pulverförmige Dispergiermittel können beispielsweise einem Werktrockenmörtel bei dessen Herstellung zugemischt werden. Beim Anmachen des Werktrockenmörtels mit Wasser lösen sich die Dispergiermittel und können nachfolgend ihre Wirkung entfalten.

Alternativ ist es auch möglich, Polycarboxylatether oder deren Derivate sowie die in der WO 2006/042709 beschrieben Kondensationsprodukten der anorganischen Feststoffsuspension in gelöster Form zuzusetzen. Insbesondere kann das Dispergiermittel direkt in das Anmachwasser dosiert werden.

Diese Verfahren Fließmittel in eine anorganische Feststoffsuspension einzubringen haben jedoch den Nachteil, dass die dispergierende Wirkung sich nicht unmittelbar nach Zugabe des Anmachwassers entfaltet. Unabhängig davon ob das Dispergiermittel als Pulver oder in wässriger Lösung zugesetzt wird, kann es beispielsweise bei einem Trockenmörtel -je nach Wasser zu Zement Verhältnis (w/z Wert) bzw. Wasseranspruch - über 100 Sekunden dauern, bis man nach Zugabe des Anmachwassers unter starkem Rühren eine homogene Suspension erhält. Dies ist insbesondere bei der Verwendung von Mischpumpen problematisch.

Die EP2574636 beschreibt eine pulverförmige Zusammensetzung, herstellbar durch in Kontakt bringen eines Pulvers, welches mindestens ein anorganisches Bindemittel umfasst, mit 0,01 bis 10 Gew.-%, bezogen auf die Gesamtmasse der Zusammensetzung, einer flüssigen Komponente, umfassend ein Dispergiermittel auf Basis von säuregruppenhaltigen Polymeren, welche Polyethergruppen umfassen und mindestens 30 Gew.-% eines organischen Lösungsmittels. Die so hergestellten Pulver zeigen eine deutlich verbesserte zeitliche Entfaltung der dispergierenden Wirkung. Nachteilig für viele Anwendungen ist jedoch die relativ langsame Aushärtung dieser Systeme.

Um vergleichen zu können, welche Zeit benötigt wird eine homogene anorganische Feststoffsuspension zu erhalten, ist es bekannt, die sogenannte Stabilisationszeit ts zu bestimmen. Die Stabilisationszeit kann anhand der aufgezeichneten Leistungskurve eines Mischwerkzeugs berechnet werden. Diesbezüglich wird auf folgende Veröffentlichungen verwiesen: 1.) Chopin, D.; de Larrad, F.; Cazacliu, B.: Why do HPC and SCC require a longer mixing time? Cement and Concrete Research 34, 2004, S. 2237-2243; 2.) Mazanec, O.: Charakterisierung der Mischzeit und des rheologischen Verhaltens ultrahochfester Betone unter Einbeziehung interpartikulärer Wechselwirkungen, Dissertation, Technische Universität München, 2013; 3.) Mazanec, O.; Schießl, P.: Mixing Time Optimisation for UHPC. Ultra High Performance Concrete (UHPC). In: Second International Symposium on Ultra High Performance Concrete, March 05-07, 2008, S. 401-408, ISBN: 978-3-89958-376-2.

Die Stabilisationszeit (ts) ist als die Zeit definiert, bei der sich die Leistungskurve des Mischwerkzeugs nach dem Erreichen der maximalen Antriebsleistung der Asymptote annähert. Dabei liegt eine homogene Feststoffsuspension vor, sobald die Leistungskurve nicht mehr signifikant sinkt. Diesbezüglich wird auch auf die Veröffentlichung "Schießl, P.; Mazanec, O.; Lowke, D.: SCC and UHPC - Effect of Mixing Technology on Fresh Concrete Properties. Advances in Constructions Materials 2007, Symposium to honor H.W. Reinhardt, University of Stuttgart, 23-24 July 2007" verwiesen.

Aufgabe der vorliegenden Erfindung war es demzufolge, ein zementäres Bindemittelsystem zur Verfügung zu stellen, das eine schnelle zeitliche Entfaltung der dispergierenden Wirkung des Fließmittels nach Zugabe von Anmachwasser und gleichzeitig eine schnelle Erhärtung des zementären Systems zeigt.

Gelöst wurde diese Aufgabe durch eine Zusammensetzung umfassend,

5 - 50 Gew.-%, insbesondere 10 bis 45 Gew.-%, bevorzugt 15 bis 40 Gew.-%, insbesondere bevorzugt 20 bis 40 Gew.-% Calciumsilikat-Hydrat,
10 - 60 Gew.-%, insbesondere 20 bis 55 Gew.-%, bevorzugt 25 bis 50 Gew.-%, insbesondere bevorzugt 25 bis 40 Gew.-% mindestens eines wasserlöslichen, säuregruppenhaltigen Polymers, umfassend Polyethergruppen,
5 - 40 Gew.-%, insbesondere 10 bis 40 Gew.-%, bevorzugt 20 bis 40 Gew.-%, insbesondere bevorzugt 25 bis 35 Gew.-% mindestens eines Polyalkylenglycolethers der Formel (1)

$$R^{\alpha}\text{-}(C_{\beta}H_{2\beta}O)_{\omega}\text{-}H \qquad (1)$$

wobei

$R^{\alpha}$ für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen, wobei der Arylrest keine Säuregruppen umfasst und
$\beta$ unabhängig voneinander für jede ($C_{\beta}H_{2\beta}O$)-Einheit gleich oder verschieden 2, 3, 4 oder 5 und
$\omega$ für 3 bis 200 steht.

Es ist erfindungswesentlich, dass das erfindungsgemäße Polymer eine Säuregruppe umfasst. Unter dem Begriff "Säuregruppe" wird in der vorliegenden Anmeldung sowohl die freie Säure als auch deren Salze verstanden. Bevorzugt kann es sich bei der Säure um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handeln. Besonders bevorzugt sind Carboxy- und Phosphonooxygruppen.
In einer bevorzugten Ausführungsform handelt es sich bei den Polyethergruppen des mindestens einen wasserlöslichen, säuregruppenhaltigen Polymers um Polyethergruppen der Struktureinheit (I),

$$*\text{-}U\text{-}(C(O))_k\text{-}X\text{-}(AlkO)_n\text{-}W \qquad (I)$$

wobei

* die Bindungsstelle an das säuregruppenhaltige Polymer anzeigt,
U für eine chemische Bindung oder eine Alkylengruppe mit 1 bis 8 C-Atomen steht,
X Sauerstoff, Schwefel oder eine Gruppe $NR^1$ bedeutet,
k 0 oder 1 ist,
n für eine ganze Zahl steht, deren Mittelwert, bezogen auf das säuregruppenhaltige Polymer im Bereich von 3 bis 300 liegt,
Alk für $C_2$-$C_4$-Alkylen steht, wobei Alk innerhalb der Gruppe $(Alk\text{-}O)_n$ gleich oder verschieden sein kann,
W einen Wasserstoff-, einen $C_1$-$C_6$-Alkyl- oder einen Arylrest bedeutet oder die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben dem Stickstoffatom und neben Kohlenstoffatomen, 1 , 2 oder 3 zusätzliche Heteroatome, ausgewählt unter Sauerstoff, Stickstoff und Schwefel aufweisen kann, wobei die Stickstoffringlieder eine Gruppe $R^2$ aufweisen können, und wobei 1 oder 2 Kohlenstoffringglieder als Carbonylgruppe vorliegen können,
$R^1$ für Wasserstoff, $C_1$-$C_4$-Alkyl oder Benzyl steht, und
$R^2$ für Wasserstoff, $C_1$-$C_4$-Alkyl oder Benzyl steht.

In einer besonders bevorzugten Ausführungsform stellt das wasserlösliche, säuregruppenhaltige Polymer, umfassend Polyethergruppen, ein Polykondensationsprodukt dar, enthaltend

(II) eine einen Aromaten oder Heteroaromaten und eine Polyethergruppe aufweisende Struktureinheit sowie
(III) eine phosphatierte einen Aromaten oder Heteroaromaten aufweisende Struktureinheit.

Die Struktureinheiten (II) und (III) werden bevorzugt durch folgende allgemeine Formeln repräsentiert

(II) A-U-(C(O))$_k$-X-(AlkO)$_n$-W

mit

A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen;

(III)

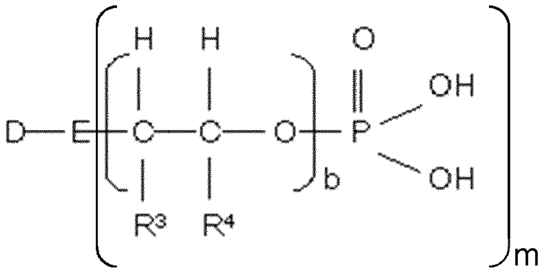

mit

D gleich oder verschieden sowie repräsentiert durch eine substituierte oder unsubstituierte aromatische oder heteroaromatische Verbindung mit 5 bis 10 C-Atomen im aromatischen System.

Weiterhin ist E gleich oder verschieden sowie repräsentiert durch N, NH oder O, m = 2 falls E = N und m = 1 falls E = NH oder O.

$R^3$ und $R^4$ sind unabhängig voneinander gleich oder verschieden sowie repräsentiert durch einen verzweigten oder unverzweigten $C_1$- bis $C_{10}$-Alkylrest, $C_5$- bis $C_8$-Cycloalkylrest, Arylrest, Heteroarylrest oder H, bevorzugt durch H, Methyl, Ethyl oder Phenyl, besonders bevorzugt durch H oder Methyl und insbesondere bevorzugt durch H. Weiterhin ist b gleich oder verschieden sowie repräsentiert durch eine ganze Zahl von 0 bis 300. Falls b = 0 ist E = O. Besonders bevorzugt ist D = Phenyl, E = O, $R^3$ und $R^4$ = H und b = 1.

Bevorzugt enthält das Polykondensationsprodukt eine weitere Struktureinheit (IV), welche durch folgende Formel repräsentiert wird

(IV)

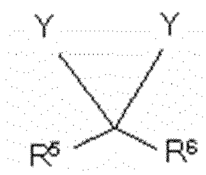

mit

Y unabhängig voneinander gleich oder verschieden und repräsentiert durch (II), (III) oder weitere Bestandteile des Polykondensationsproduktes.

$R^5$ und $R^6$ sind bevorzugt gleich oder verschieden und repräsentiert durch H, $CH_3$, COOH oder eine substituierte oder unsubstituierte aromatische oder heteroaromatische Verbindung mit 5 bis 10 C-Atomen. Hierbei werden $R^5$ und $R^6$ in Struktureinheit (IV) unabhängig voneinander bevorzugt durch H, COOH und/oder Methyl repräsentiert. In einer besonders bevorzugten Ausführungsform werden $R^5$ und $R^6$ durch H repräsentiert.

Das molare Verhältnis der Struktureinheiten (II), (III) und (IV) des erfindungsgemäßen phosphatierten Polykondensationsproduktes kann in weiten Bereichen variiert werden. Als zweckmäßig hat es sich erwiesen, dass das Molverhältnis der Struktureinheiten [(II) + (III)]: (IV) 1 : 0,8 bis 3, bevorzugt 1 : 0,9 bis 2 und besonders bevorzugt 1: 0,95 bis 1,2 beträgt.

Das Molverhältnis der Struktureinheiten (II): (III) liegt normalerweise bei 1 : 10 bis 10 : 1, bevorzugt bei 1 : 7 bis 5 : 1 und besonders bevorzugt bei 1 : 5 bis 3 : 1.

Die Gruppen A und D in den Struktureinheiten (II) und (III) des Polykondensationsproduktes werden meist durch Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl bevorzugt Phenyl repräsentiert, wobei A und D unabhängig voneinander gewählt werden können und auch jeweils aus einem Gemisch der genannten Verbindungen bestehen können. Die Gruppen X und E werden unabhängig voneinander bevorzugt durch O repräsentiert.

Bevorzugt wird n in Struktureinheit (I) durch eine ganze Zahl von 5 bis 280, insbesondere 10 bis 160 und

besonders bevorzugt 12 bis 120 repräsentiert und b in Struktureinheit (III) durch eine ganze Zahl von 0 bis 10, bevorzugt 1 bis 7 und besonders bevorzugt 1 bis 5. Die jeweiligen Reste, deren Länge durch n bzw. b definiert wird, können hierbei aus einheitlichen Baugruppen bestehen, es kann aber auch zweckmäßig sein, dass es sich um eine Mischung aus unterschiedlichen Baugruppen handelt. Weiterhin können die Reste der Struktureinheiten (II) und (III) unabhängig voneinander jeweils die gleiche Kettenlänge besitzen, wobei n bzw. b jeweils durch eine Zahl repräsentiert wird. Es wird aber in der Regel zweckmäßig sein, dass es sich jeweils um Mischungen mit unterschiedlichen Kettenlängen handelt, so dass die Reste der Struktureinheiten im Polykondensationsprodukt für n und unabhängig für b unterschiedliche Zahlenwerte aufweisen.

In einer besonderen Ausführungsform sieht die vorliegende Erfindung weiterhin vor, dass es sich um ein Natrium-, Kalium-, Ammonium- und/oder Calcium-Salz und bevorzugt um ein Natrium- und/oder Kalium-Salz, des phosphatierten Polykondensationsproduktes handelt.

Häufig weist das erfindungsgemäße phosphatierte Polykondensationsprodukt ein gewichtsmittleres Molekulargewicht von 4000 g/mol bis 150.000 g/mol, vorzugsweise 10.000 bis 100.000 g/mol und besonders bevorzugt 20.000 bis 75.000 g/mol auf.

Bezüglich der gemäß vorliegender Erfindung bevorzugt zu verwendenden phosphatierten Polykondensationsprodukte und deren Herstellung wird weiterhin auf die Patentanmeldungen WO 2006/042709 und WO 2010/040612 Bezug genommen, deren Inhalt hiermit in die Anmeldung aufgenommen wird.

In einer weiteren bevorzugten Ausführungsform handelt es sich bei dem säuregruppenhaltigen Polymer um mindestens ein Copolymer, welches erhältlich ist durch Polymerisation einer Mischung von Monomeren, umfassend

(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und

(VI) mindestens ein ethylenisch ungesättigtes Monomer mit einer Polyethergruppe, wobei die Polyethergruppe bevorzugt durch die Struktureinheit (I) repräsentiert wird.

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (V) durch mindestens eine der folgenden allgemeinen Formeln aus der Gruppe (Va), (Vb) und (Vc) repräsentiert:

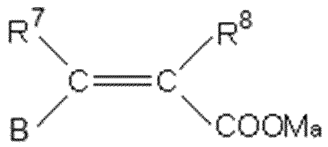
(Va)

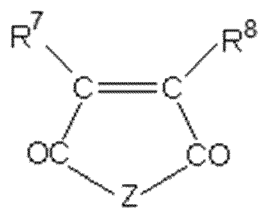
(Vb)

Bei dem Mono- oder Dicarbonsäure-Derivat (Va) und dem in cyclischer Form vorliegenden Monomer (Vb), wobei Z = O (Säureanhydrid) oder $NR^{16}$ (Säureimid) darstellen, steht $R^7$ und $R^8$ unabhängig voneinander für Wasserstoff oder einen aliphatischen Kohlenwasserstoffrest mit 1 bis 20 C-Atomen, vorzugsweise eine Methylgruppe. B bedeutet H, $-COOM_a$, $-CO-O(C_qH_{2q}O)_r-R^9$, $-CO-NH-(C_qH_{2q}O)_r-R^9$.

M bedeutet Wasserstoff, ein ein-, zwei- oder dreiwertiges Metallkation, vorzugsweise Natrium-, Kalium-, Calcium- oder Magnesium-Ion, weiterhin Ammonium oder ein organischer Aminrest sowie a = 1/3, 1/2 oder 1, je nachdem, ob es sich bei M um ein ein-, zwei- oder dreiwertiges Kation handelt. Als organische Aminreste werden vorzugsweise substituierte Ammonium-Gruppen eingesetzt, die sich ableiten von primären, sekundären oder tertiären $C_{1-20}$-Alkylaminen, $C_{1-20}$-Alkanolaminen, $C_{5-8}$-Cycloalkylaminen und $C_{6-14}$-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

$R^9$ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2, 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Weiterhin steht Z für O oder $NR^{16}$, wobei $R^{16}$ unabhängig voneinander gleich oder verschieden sowie repräsentiert wird

durch einen verzweigten oder unverzweigten $C_1$- bis $C_{10}$-Alkylrest, $C_5$- bis $C_8$-Cycloalkylrest, Arylrest, Heteroarylrest oder H.

Die folgende Formel stellt das Monomer (Vc) dar:

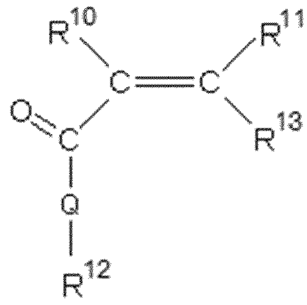

(Vc)

Hierbei steht $R^{10}$ und $R^{11}$ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen.

Weiterhin ist $R^{12}$ gleich oder verschieden und wird durch $(C_nH_{2n})$-$SO_3H$ mit n = 0, 1, 2, 3 oder 4, $(C_nH_{2n})$-OH mit n = 0, 1, 2, 3 oder 4; $(C_nH_{2n})$-$PO_3H_2$ mit n = 0, 1, 2, 3 oder 4, $(C_nH_{2n})$-$OPO_3H_2$ mit n = 0, 1, 2, 3 oder 4, $(C_6H_4)$-$SO_3H$, $(C_6H_4)$-$PO_3H_2$, $(C_6H_4)$-$OPO_3H_2$ und $(C_nH_{2n})$-$NR^{14}{}_b$ mit n = 0, 1, 2, 3 oder 4 und b durch 2 oder 3 repräsentiert.

$R^{13}$ bedeutet H, -$COOM_a$, -CO-O$(C_qH_{2q}O)_r$-$R^9$, -CO-NH-$(C_qH_{2q}O)_r$-$R^9$, wobei $M_a$, $R^9$, q und r die oben genannte Bedeutungen besitzen.

$R^{14}$ steht für Wasserstoff, einen aliphatischen Kohlenwasserstoffrest mit 1 bis 10 G Atomen, einen cycloaliphatischen Kohlenwasserstoffrest mit 5 bis 8 C-Atomen, ein ggf. substituierter Arylrest mit 6 bis 14 C-Atomen.

Weiterhin ist Q gleich oder verschieden sowie repräsentiert durch NH, $NR^{15}$ oder O, wobei $R^{15}$ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

In einer besonders bevorzugten Ausführungsform wird das ethylenisch ungesättigte Monomer (VI) durch folgende allgemeine Formeln repräsentiert

(VI)

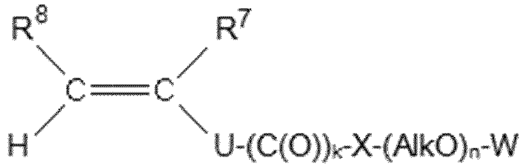

worin alle Reste die oben genannten Bedeutungen aufweisen.

Das durch Gelpermeationschromatographie (GPC) bestimmte mittlere Molekulargewicht $M_w$ des erfindungsgemäßen Copolymers beträgt vorzugsweise 5,000 bis 200,000 g/mol, besonders bevorzugt 10,000 bis 80,000 g/mol, und ganz besonders bevorzugt 20,000 bis 70,000 g/mol. Die Polymere wurden mittels Größenausschlusschromatographie auf mittlere Molmasse und Umsatz analysiert (Säulenkombinationen: OH-Pak SB-G, OH-Pak SB 804 HQ und OH-Pak SB 802.5 HQ von Shodex, Japan; Elutionsmittel: 80 Vol.-% wässrige Lösung von $HCO_2NH_4$ (0,05 mol/l) und 20 Vol.-% Acetonitril; Injektionsvolumen 100 $\mu$l; Durchflussrate 0,5 ml/min). Die Kalibrierung zur Bestimmung der mittleren Molmasse erfolgte mit linearen Polyethylenglycol-Standards. Als Maß für den Umsatz wird der Peak des Copolymers auf eine relative Höhe von 1 normiert und die Höhe des Peaks des nichtumgesetzten Makromonomer/PEG-haltigen Oligomers als Maß für den Restmonomerengehalt verwendet.

Vorzugsweise erfüllt das erfindungsgemäße Copolymer die Anforderungen der Industrienorm EN 934-2 (Februar 2002).

In einer bevorzugten Ausführungsform steht in Formel (1) des Polyalkylenglycolethers $R^{\alpha}$ für einen aliphatischen Kohlenwasserstoffrest mit 1 bis 4 C-Atomen, insbesondere 1 C-Atom, $\beta$ unabhängig voneinander für jede $(C_{\beta}H_{2\beta}O)$-Einheit gleich oder verschieden für 2 oder 3, insbesondere 2 und $\omega$ für 8 bis 100, insbesondere 10 bis 25.

In einer weiterhin bevorzugten Ausführungsform handelt es sich bei den Polyalkylenglycolethern der Formel (1) um Polyethylenglycolether oder Polypropylenglycolether oder statistische Ethylenoxid/Propylenoxid-Copolymere mit

einer mittleren Molmasse von 200 bis 2000 g/mol, Methy-, Ethyl- Propyl-, Butyl- oder höherwertige Alkylpolyalkylenglycolether, beispielsweise Polypropylenglycolmonomethylether, Butylpolyethylenglycolether, Propylpolyethylenglycolether, Ethylpolyethylenglycolether, Methylpolyethylenglycolether mit einer mittleren Molmasse von 200 bis 2000 g/mol. In einer besonders bevorzugten Ausführungsform handelt es sich bei den Polyalkylenglycolethers der Formel (1) um Methylpolyethylenglycolether mit einer mittleren Molmasse von 200 bis 1000 g/mol, insbesondere 500 g/mol.

Vorzugsweise liegt das Calciumsilikat-Hydrat in der erfindungsgemäßen Zusammensetzung in Form von Foshagit, Hillebrandit, Xonotlit, Nekoit, Clinotobermorit, 9Ä - Tobermorit (Riversiderit), 11Å - Tobermorit, 14 Ä - Tobermorit (Plombierit), Jennit, Metajennit, Calcium Chondrodit, Afwillit, $\alpha$-$Ca_2[SiO_3(OH)](OH)$, Dellait, Jaffeit, Rosenhahnit, Killalait und/oder Suolunit vor, besonders bevorzugt als Xonotlit, 9Å-Tobermorit (Riversiderit), 11Å - Tobermorit, 14 Ä - Tobermorit (Plombierit), Jennit, Metajennit, Afwillit und/oder Jaffeit. In einer weiterhin bevorzugten Ausführungsform liegt das Calciumsilikat-Hydrat in amorpher Form vor. Bevorzugt beträgt das molare Verhältnis von Calcium zu Silicium im Calciumsilikat-Hydrat von 0,6 bis 2, bevorzugt 0,8 bis 1,8, besonders bevorzugt 0,9 bis 1,6, insbesondere bevorzugt 1,0 bis 1,5. Das molare Verhältnis von Calcium zu Wasser im Calciumsilikat-Hydrat beträgt vorzugsweise 0,6 bis 6, besonders bevorzugt 0,6 bis 2 und insbesondere bevorzugt 0,8 bis 2.

In einer besonders bevorzugten Ausführungsform liegt die erfindungsgemäße Zusammensetzung als Pulver vor. Bevorzugt ist hierbei, dass das säuregruppenhaltige Polymer und der Polyalkylenglycolether auf der Oberfläche von Partikeln, umfassend das Calciumsilikat-Hydrat, verteilt vorliegen. Die Partikel können hierbei neben dem erfindungswesentlichen Calciumsilikat-Hydrat noch weitere Verbindungen und insbesondere Salze umfassen, welche insbesondere aus dem Herstellungsprozess des Calciumsilikat-Hydrats stammen können. Beispielsweise kann es sich hierbei um Natriumnitrat, Natriumacetat und/oder Siliciumdioxid handeln. Diese weiteren Verbindungen können in der erfindungsgemäßen Zusammensetzung insbesondere in einer Menge von 0,1 bis 35 Gew.-%, bevorzugt 5 bis 30 Gew.-% vorhanden sein. Bevorzugt ist die mittlere Partikelgröße der erfindungsgemäßen Pulver kleiner als 400 $\mu$m, besonders bevorzugt kleiner als 100 $\mu$m und insbesondere zwischen 1 und 250 $\mu$m, besonders bevorzugt zwischen 1 und 75 $\mu$m, gemessen durch Lasergranulometrie. Der Begriff mittlere Partikelgröße entspricht im Sinne der vorliegenden Anmeldung dem Median-Wert der Partikel Volumenverteilung, d.h. dem D50-Wert.

Ein weiterer Gegenstand der vorliegenden Erfindung ist ein Verfahren zur Herstellung der erfindungsgemäßen Zusammensetzung, wobei eine wasserlösliche Calciumverbindung mit einer wasserlöslichen Silikatverbindung umgesetzt wird, wobei die Umsetzung der wasserlöslichen Calciumverbindung mit der wasserlöslichen Silikatverbindung in Anwesenheit von Wasser erfolgt, welches das mindestens eine erfindungsgemäße säuregruppenhaltige Polymer zumindest teilweise umfasst. Der mindestens eine erfindungsgemäße Polyalkylenglycolether der Formel (1) und ggf. die restliche Menge des mindestens einen erfindungsgemäßen säuregruppenhaltigen Polymers können hierbei unabhängig voneinander in der wässrigen Phase vor der Umsetzung der wasserlösliche Calciumverbindung mit der wasserlöslichen Silikatverbindung vorgelegt werden oder während der Umsetzung zugegeben werden. Bevorzugt wird der mindestens eine erfindungsgemäße Polyalkylenglycolether der Formel (1) und ggf. die restliche Menge des mindestens einen erfindungsgemäßen säuregruppenhaltigen Polymers nach der Umsetzung der wasserlösliche Calciumverbindung mit der wasserlöslichen Silikatverbindung zugegeben.

Als wasserlösliche Calciumverbindungen und wasserlösliche Silikatverbindungen kommen jeweils prinzipiell auch nur verhältnismäßig schlecht in Wasser lösliche Verbindungen in Frage, obwohl gut wasserlösliche Verbindungen (welche sich vollständig oder nahezu vollständig in Wasser lösen) jeweils bevorzugt sind. Es muss jedoch gewährleistet sein, dass eine für die Umsetzung in der wässrigen Umgebung mit dem entsprechenden Reaktionspartner (entweder wasserlösliche Calciumverbindung oder wasserlösliche Silikatverbindung) ausreichende Reaktivität vorliegt. Die Löslichkeit der Calciumverbindung und der Silikatverbindung liegt bevorzugt bei größer 0,005 Mol/l Wasser, bestimmt bei 20 °C und Normaldruck.

In einer bevorzugten Ausführungsform wird das mindestens eine erfindungsgemäße säuregruppenhaltige Polymer zumindest teilweise in Wasser vorgelegt und die wasserlösliche Calciumverbindungen und die wasserlösliche Silikatverbindungen anschließend gleichzeitig getrennt voneinander zugegeben.

Hinsichtlich des erfindungsgemäßen Verfahrens beträgt das molare Verhältnis von Calcium zu Silizium insbesondere 0,6 bis 2,0, bevorzugt 0,8 bis 1,8, besonders bevorzugt 0,9 bis 1,6, insbesondere bevorzugt 0,9 bis 1,5.

Als wasserlösliche Calciumverbindungen eignen sich insbesondere Calciumnitrat, Calciumhydroxid, Calciumacetat, Calciumsulfamat und/oder Calciummethansulfonat.

Die wasserlösliche Silikatverbindung ist ausgewählt unter Natriumsilikat, Kaliumsilikat, Wasserglas, Aluminiumsilikat, Calciumsilikat, Kieselsäure, Natriummetasilikat, Kaliummetasilikat und Mischungen von zwei oder mehreren dieser Komponenten. Besonders bevorzugt ist die wasserlösliche Silikatverbindung ausgewählt unter einem Alkalimetallsilikat der Formel m $SiO_2 \cdot$ n $M_2O$, wobei M für Li, Na, K und $NH_4$, vorzugsweise für Na oder K, steht, oder Gemischen davon, m und n Molzahlen bedeuten und das Verhältnis von m:n etwa 0.9 bis etwa 4, vorzugsweise etwa 0.9 bis etwa 3,8 und insbesondere etwa 0.9 bis etwa 3,6, beträgt. Unter dem Begriff "Wasserglas" sind aus dem Schmelzfluss erstarrte wasserlösliche Salze der Kieselsäuren, insbesondere Kalium- und Natriumsilikate oder deren wässrige Lösungen zu verstehen, wie sie im Online-Nachschlagewerk RÖMPP (Thieme Verlagsgruppe) unter dem Stichwort "Wasserglas"

(letzte Aktualisierung Mai 2004) zu finden sind.

Üblicherweise wird im ersten Schritt eine das Calciumsilikat-Hydrat in feindisperser Form enthaltende Suspension erhalten. Bevorzugt beträgt der Feststoffgehalt der Suspension zwischen 5 und 40 Gew.-%, besonders bevorzugt zwischen 10 und 35 Gew.-%, insbesondere bevorzugt zwischen 10 und 30 Gew.-%. Bevorzugt ist die mittlere primäre Partikelgröße der individuellen Calciumsilikat-Hydrat Partikel in den erfindungsgemäßen Suspension kleiner als 500 nm, besonders bevorzugt kleiner als 250 nm und insbesondere zwischen 1 und 150 nm, gemessen durch Ultrakleinwinkelröntgenstrahlung (Soft Matter, 2013, 9, 4864).

Bezüglich der Herstellung des Calciumsilikat-Hydrats gemäß vorliegender Erfindung wird weiterhin auf die Patentanmeldungen WO2010/026155, WO2011/026720 und WO2011/029711 Bezug genommen, deren Inhalt hiermit vollständig in die Anmeldung aufgenommen wird. Weiterhin wird diesbezüglich auch auf die noch unveröffentlichten Anmeldungen PCT/EP2014/051494 sowie PCT/EP2014/051485 Bezug genommen, deren Inhalt hiermit vollständig in die Anmeldung aufgenommen wird.

In einer besonders bevorzugten Ausführungsform umfasst das erfindungsgemäße Verfahren weiterhin einen Trocknungsschritt. Insbesondere kann die Trocknung durch Walzentrocknung, Sprühtrocknung, Trocknung im Wirbelbettverfahren, durch Substanztrocknung bei erhöhter Temperatur oder sonstige übliche Trocknungsverfahren erfolgen. Der bevorzugte Bereich der Trocknungstemperatur liegt zwischen 50 und 250 °C. Insbesondere bevorzugt für den Trocknungsschritt ist eine Sprühtrocknung, wobei diese bevorzugt bei einer Temperatur zwischen 100 und 240°C durchgeführt wird. Die erfindungsgemäße Zusammensetzung wird hierbei bevorzugt in Form eines Pulvers erhalten.

Die Restfeuchte des Pulvers beträgt bevorzugt kleiner 10 Gew.-%, besonders bevorzugt kleiner 5 Gew.-% und insbesondere bevorzugt kleiner 3 Gew.-%.

Ein weiterer Gegenstand der vorliegenden Erfindung ist eine Mischung, umfassend ein zementäres Bindemittel und 0,01 bis 10 Gew.-% der erfindungsgemäßen Zusammensetzung, bezogen auf die Gesamtmasse der Mischung. Die Bezugsgröße "Gesamtmasse der Mischung" umfasst hierbei die erfindungsgemäße Zusammensetzung.

Bevorzugt handelt es sich bei dem zementären Bindemittel um mindestens eines aus der Reihe Zement auf Basis Portlandzement, Weißzement, Calciumaluminatzement, Calciumsulfoaluminatzement und latent hydraulisches bzw. puzzolanisches Bindemittel.

In einer besonders bevorzugten Ausführungsform umfasst die Mischung, welche ein zementäres Bindemittel umfasst, mindestens eine Verbindung aus der Reihe Quarzsand, Quarzmehl, Kalkstein, Schwerspat, Calcit, Aragonit, Vaterit, Dolomit, Talk, Kaolin, nicht quellfähige Zweischichtsilikate (wie z.B. Glimmer), quellfähige Zweischichtsilikate (wie z.B. Bentonite), Kreide, Titandioxid, Rutil, Anatas, Aluminiumhydroxid, Aluminiumoxid, Magnesiumhydroxid und Brucit. Insbesondere kann die Gesamtmasse der Mischung zu mindestens 30 Gew.-%, insbesondere zu mindestens 40 Gew.-% und besonders bevorzugt zu mindestens 50 Gew.-% aus mindestens einer Verbindung aus der Reihe Quarzsand, Quarzmehl, Kalkstein, Schwerspat, Calcit, Aragonit, Vaterit, Dolomit, Talk, Kaolin, nicht quellfähige Zweischichtsilikate (wie z.B. Glimmer), quellfähige Zweischichtsilikate (wie z.B. Bentonite), Kreide, Titandioxid, Rutil, Anatas, Aluminiumhydroxid, Aluminiumoxid, Magnesiumhydroxid und Brucit bestehen.

Bei der Mischung, welche ein zementäres Bindemittel umfasst, handelt es sich bevorzugt um einen Trockenmörtel. Das ständige Streben nach weitgehender Rationalisierung sowie verbesserter Produktqualität hat dazu geführt, dass im Baubereich Mörtel für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als sogenannte Werktrockenmörtel zur Verfügung gestellt. Dabei werden fertige Gemische, die auf der Baustelle ausschließlich durch Zugabe von Wasser und Durchmischen verarbeitbar gemacht werden, gemäß DIN 18557 als Werkmörtel, insbesondere als Werktrockenmörtel bezeichnet. Derartige Mörtelsysteme können die verschiedensten bauphysikalischen Aufgaben erfüllen. Je nach gestellter Aufgabe werden dem zementären Bindemittel weitere Additive bzw. Zusatzmittel beigemengt, um den Werktrockenmörtel an den speziellen Einsatzzweck anzupassen. Hierbei kann es sich bspw. um Schwundreduzierer, Expansionsmittel, Beschleuniger, Verzögerer, Verdicker, Entschäumer, Luftporenbildner, Korrosionsinhibitoren handeln.

Bei dem erfindungsgemäßen Werktrockenmörtel kann es sich insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel (z. B. für Trinkwasserrohre) handeln.

In einer besonderen Ausführungsform kann es sich bei der erfindungsgemäßen Mischung auch um eine selbstnivellierende Verlaufsmasse handeln. Dies ist besonders vorteilhaft, da solche pulverförmigen Zusammensetzungen für geringe Schichtdicken in der Regel sehr fein sind und sich daher vergleichsweise langsam mit Wasser anmischen lassen. Ebenso eingeschlossen sind Werkmörtel, welche bei der Herstellung auf der Baustelle außer mit Wasser auch noch mit weiteren Komponenten, insbesondere flüssigen und/oder pulverförmigen Additiven und/oder mit Gesteinskörnung versehen werden können (Zweikomponenten Systeme).

Ein weiterer Gegenstand der vorliegenden Erfindung ist die Verwendung der erfindungsgemäßen Zusammensetzung in einer pulverförmigen Mischung, umfassend ein zementäres Bindemittel, zur Beschleunigung der zeitlichen Entfaltung der dispergierenden Wirkung des säuregruppenhaltigen Polymers nach Zugabe des Anmachwassers und

einer nachfolgend beschleunigten Härtung der Mischung. Bevorzugt werden 0,01 bis 10 Gew.-%, insbesondere 0,01 bis 5 Gew.-%, insbesondere bevorzugt 0,1 bis 2 Gew.-% der erfindungsgemäßen Zusammensetzung, bezogen auf die Gesamtmasse der pulverförmigen Mischung, umfassend ein zementäres Bindemittel, eingesetzt.
Die Bezugsgröße "Gesamtmasse" umfasst hierbei die erfindungsgemäße Zusammensetzung.

Die nachfolgenden Beispiele verdeutlichen die Vorteile der vorliegenden Erfindung.

Beispiele

Gelpermeationschromatographie

Die Probenpräparation für die Molgewichtsbestimmung erfolgte durch Lösen von Polymerlösung im GPC Eluent, so dass die Polymerkonzentration im GPC-Eluent 0.5 Gew.-% beträgt. Danach wurde diese Lösung über einen Spritzenvorsatzfilter mit Polyethersulfonmembran und Porengröße 0.45 µm filtriert. Das Injektionsvolumen dieses Filtrats betrug 50 - 100 µl.

Die Bestimmung der mittleren Molekulargewichte erfolgte auf einem GPC Gerät der Firma Waters mit dem Typnamen Alliance 2690 mit UV-Detektor (Waters 2487) und RI-Detektor (Waters 2410).

| | |
|---|---|
| Säulen: | Shodex SB-G Guard Column for SB-800 HQ series Shodex OHpak SB 804HQ and 802.5HQ (PHM gel, 8 x 300 mm, pH 4,0 bis 7,5) |
| Eluent: | 0,05 M wässrige Ammoniumformiat / Methanol-Mischung = 80:20 (Volumenteile) |
| Flußrate: | 0,5 ml/min |
| Temperatur: | 50° C |
| Injektion: | 50 bis 100 µl |
| Detektion: | RI und UV |

Die Molekulargewichte der Polymere wurden mit zwei unterschiedlichen Kalibrierungen bestimmt. Erstens erfolgte die Bestimmung relativ zu Polyethylenglycol Standards der Firma PSS Polymer Standards Service GmbH. Die Molekulargewichtsverteilungskurven der Polyethylenglycolstandards wurden mittels Lichtstreuung bestimmt. Die Massen der Polyethylenglycolstandards betrugen 682 000, 164 000, 114 000, 57 100, 40 000, 26 100, 22 100, 12 300, 6 240, 3 120, 2 010, 970, 430, 194, 106 g/mol.

**Chemie der verwendeten Polycarboxylatether**

Die verwendeten Polymere haben folgende Zusammensetzung

Tabelle 1:

| Polymer | Mol Acrylsäure | Mol Makromonomer | Makromonomer | Mw (g/mol) |
|---|---|---|---|---|
| A | 10 | 1 | VOBPEPG-3000 | 21.000 |
| B | 5 | 1 | VOBPEPG-3000 | 27.000 |

Die Abkürzung VOBPEPG-3000 steht für blockartig aufgebautes Vinyl-oxy-butyl-polyethylen/propylen-glycol. Block A enthält lediglich Polyethylenglycol, Block B eine statistische Mischung aus Ethylenglycol und Propylenglycol. Die molare Masse beträgt 3000 g/mol. Die Struktur entspricht Formel ω mit n-23, k-13, l~28.

Formel ω

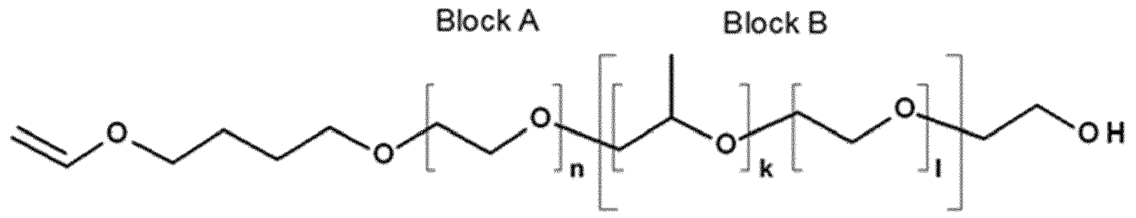

Das verwendete MPEG500 und MPEG1000 in allen Beispielen entspricht dem Pluriol® A 500 E, bzw. dem

Pluriol A 1020 E (Verkaufsprodukt der BASF SE).

Herstellung des Polycarboxylatethers B

In einem 1000 ml Vierhalskolben mit Thermometer, pH-Meter und Rückflusskühler werden 385 g Wasser, 360 g (0,12 mol) VOBPEPG-3000 vorgelegt.
Diese Mischung wird auf 15 °C abgekühlt. Danach gibt man 0,5 g 2%ige $FeSO_4$*$18H_2O$-Lösung und 42,4 g (0,59 mol) Acrylsäure 99%-ig zu. Danach fügt man 1,8 g Mercaptoethanol und 5 g Brüggolit FF6 zu. Darauf stellt sich ein pH-Wert von ca. 4,6 ein. Nach einer Mischzeit von 2 Minuten werden 2,5 g 50%ige $H_2O_2$-Lösung zugegeben. Nach kurzer Zeit beginnt die Polymerisation und ein stetiger Temperaturanstieg stellt sich ein. Nach ca. 2 Minuten erreicht die Reaktion das Temperaturmaximum bei etwa 42 °C und einen pH-Wert von 4,2. Nach weiteren 5 Minuten wird der Ansatz mit 30 g 20%iger NaOH-Lösung auf pH = 5,5 gestellt. Man erhält eine leicht gelblich gefärbte, klare wässerige Polymerlösung mit einem Feststoffgehalt von 50 Gew.-%.
Die Herstellung des Polycarboxylatethers A erfolgt analog, wobei der Feststoffgehalt ebenfalls 50 Gew.-% betrug.

Zur Herstellung des Additivs V1 wird die Lösung des Polymers A und für die Herstellung des Additivs V2 wird die Lösung des Polymers B mit einem Niro Mobil Minor Sprühtrockner getrocknet. Die Zerstäubung erfolgte mit einer Zweistoffdüse mit einem Stickstoffstrom. Eingangstemperatur 230°C, Ausgangstemperatur 100°C.

**Herstellungsvorschrift nanoskalige CSH-Lösung**

Herstellung der Trägerkomponente T

Verwendete Rohstoffe:

Calciumhydroxid (Merck KGaA, Reinheit 97 %)
Calciumacetat Monohydrat (Sigma Aldrich Co. LLC, > 99,0 %)
Entschäumer (Melflux DF 93 der BASF Construction Solutions GmbH, Feststoffgehalt = 60,0 Gew.-%)
Na-Wasserglas (BASF SE, Natriumwasserglas 37/40 PE, Feststoffgehalt 36,1 Gew.-%, Modul $n(SiO_2)/n(Na_2O)$ = 3,4)
Polymer A als 36,1 Gew.-%ige wässrige Lösung.

Beschreibung Synthese:

Calciumquelle CL:

Die Calciumquelle CL ist wie folgt zusammengesetzt:

| Stoff | Anteil Gew.-% |
|---|---|
| Calciumhydroxid-Suspension (30 Gew.-%ig) | 32,7 |
| Calciumacetat Monohydrat | 10,1 |
| Wasser | 57,2 |

Die Calciumquelle wird durch folgende Schritte hergestellt:

(i) Vorlage des Wasser
(ii) Zugabe einer wässrigen 30 Gew.-%igen Calciumhydroxid Suspension
(iii) Zugabe von Calciumacetat Monohydrat

Die Suspension wird permanent mit 40 rpm (Umdrehungen pro Minute) mit einem mechanischen Rührwerk mit Flügelrührer gerührt um ein Sedimentieren vom Calciumhydroxid zu vermeiden.

Silikatquelle SL:

Die Silikatquelle SL ist wie folgt zusammengesetzt:

| Stoff | Anteil Gew.-% |
|---|---|
| Na-Wasserglas (36,1 Gew.-%ig) | 49,8 |
| Wasser | 50,2 |

Die Silikatquelle SL wird hergestellt indem Wasser vorgelegt wird und unter Rühren bei 40 rpm Na-Wasserglas zugegeben wird.

Stabilisatorlösung STL:

Die Stabilisatorlösung STL ist wie folgt zusammengesetzt:

| Stoff | Anteil Gew.-% |
|---|---|
| Polymer A (36,1 Gew.-%ige wässrige Lösung) | 38,7 |
| Melflux DF 93 (Entschäumer) | 2,3 |
| Wasser | 61,0 |

Die Stabilisatorlösung STL wird durch folgende Schritte hergestellt:

(i) Vorlage des Wassers
(ii) Zugabe von Polymer A
(iii) Zugabe von Melflux DF 93

Die Lösung wird dabei permanent bei 40 rpm gerührt und die Temperatur auf 22 °C eingestellt.

Zur Herstellung der Trägerkomponente T wird die Sabilisatorlösung STL in einen Reaktor vorgelegt und bei 40 rpm gerührt. An diesen Reaktor ist eine 20 ml 3-Kanal-Mischzelle angeschlossen. Die Mischzelle ist mit einem Ika Ultra Turrax ausgestattet, der ein Rotor-Stator Dispergierwerkzeug (Ika, S 25 KV - 25F) bei 10000 rpm antreibt. Die Stabilisatorlösung STL wird mittels Schlauchpumpe Ismatec MCP Process mit einer Pumprate von 108,83 g /min bei einer Umdrehungsgeschwindigkeit von 50 rpm im Kreis über die Mischzelle gepumpt. Während 150 min Synthesedauer werden parallel die Calciumquelle CL und die Silikatquelle SL in einem konstanten Massenverhältnis von CL/SL = 1,36 mittels Schlauchpumpen in die Mischzelle eingetragen und mit der Stabilisatorlösung STL vermischt. Die Calciumquelle CL wird dabei mit einer konstanten Pumprate von 2,33 g/min und die Silicatquelle SL mit einer konstanten Pumprate von 1,71 g/min ein die Mischzelle gepumpt. Insgesamt werden 1,53 Gewichtsteile der Stabilisatorlösung STL mit 1,36 Gewichtsteilen der Calciumquelle und 1,0 Gewichtsteilen der Silikatquelle vermischt. Nach vollständiger Dosierung der Calciumquelle CV und der Silikatquelle SL wird das Reaktionsgemisch noch 15 min bei 40 rpm nachgerührt. Der resultierende Feststoffgehalt der Trägerkomponente T beträgt 16,5 Gew.-%.

**Allgemeine Herstellvorschrift für das Vergleichsprodukt V4 und die erfindungsgemäßen Produkte V 5 bis V9**

In 1 kg 16,5 %iger Trägerkomponente T (nanoskalige CSH-Suspension) werden unter Rühren die in Tabelle 2 angegebenen Mengen an MPEG 500 und Polymer A oder Polymer B eingemischt.
Diese Mischung wird mit einem Niro Mobil Minor Sprühtrockner getrocknet. Die Zerstäubung erfolgte mit einer Zweistoffdüse mit einem Stickstoffstrom. Eingangstemperatur 230°C, Ausgangstemperatur 100°C. Das Resultat ist ein feines nicht klebendes weißes Pulver. Das Pulver hat eine Rest-Feuchte von 1,7 Gew.-%.

**Herstellvorschrift** für das Vergleichsbeispiel V3

Für das Vergleichsbeispiel V3 wird Polycarboxylatether-Lösung in Methylpolyethylenglycol (MPEG500) in Anlehnung an Beispiel 4 der EP 2574636 A1 (siehe Seite 10, Zeile 20-27) hergestellt, wobei reines MPEG500 anstatt eines MPEG500 / Glycerincarbonatgemischs verwendet wird. Es fällt als wasserfreie Flüssigkeit an. Die Vermischung der Polycarboxylatether-Lösung mit dem Bindemittelsystem erfolgt in Analogie zu Anwendungsbeispiel 1 auf Seite 10 der

EP 2574636 A1. 1000 g Bindemittelsystem, besteht aus 500 g Zement (CEM I 52.5 R, Typ Milke von HeidelbergCement) und 500 g feinem Quarzsand (Typ H33 von Quarzwerke Frechen), werden in einem Becher mit einem Axialrührer bei 500 Umdrehungen pro Minute gerührt. Dazu werden 3,0 g Polycarboxylatether-Lösung in Methylpolyethylenglycol (Additiv V3A) (entspricht 0.30 Gew.-% reinem Polycarboxylatether bezogen auf den Zementgehalt) zugegeben.

Tabelle 2: Herstellung des Vergleichsproduktes V4 und der erfindungsgemäßen Produkte V 5 bis V9

| Produkt | Trägerkomponente | Menge Träger-Komponente Lösung in g | Typ Polyethylen-glycol Komponente | MPEG500 in g | Typ Polymer | Menge Polymerlösung in g (50 Gew.-%ige Lösung) | Anteil Polymer im Produkt in Gew.-% | Restfeuchte % nach Sprühtrocknung |
|---|---|---|---|---|---|---|---|---|
| V4 | T | 1000 | | 0 | A | 110 | 47,7 | 1,9 |
| V5 | T | 1000 | MPEG500 | 55 | A | 110 | 38,1 | 1,7 |
| V6 | T | 1000 | MPEG500 | 35.4 | A | 70.8 | 36,2 | 2,2 |
| V7 | T | 1000 | MPEG500 | 27,5 | A | 165 | 48,1 | 2,3 |
| V8 | T | 1000 | MPEG1000 | 55 | A | 110 | 38,1 | 1,5 |
| V9 | T | 1000 | MPEG500 | 55 | B | 110 | 38,1 | 2,1 |

Die Restfeuchte in Tabelle 2 wurde durch Trocknung der Probe bei 90°C bis Gewichtskonstanz ermittelt.

"Anteil Polymer im Produkt in Gew.-%" gibt die Gesamtmenge an Polymer im Produkt an, welche aus der Herstellung der Trägerkomponente und jeweils aus der Herstellung der Produkte V4 bis V9 stammt.

Die Partikelgröße des Pulvers V5 wurde durch Lasergranulometrie an einem Mastersizer 2000 (Malvern Instruments Ltd, Großbritannien) durch das im Gerät implementierte vollständig automatisierte Messprogramm bestimmt (gewählte Einstellungen: Rüttelrate 40% sowie Luftdruck 1.5 bar), wobei ein Wert von 11 $\mu$m (D50-Wert) gemessen wurde.

**Anwendungstechnische Versuche**

Misch und Versuchstechnik

Zur Prüfung der Adsorptions- und Verflüssigungsgeschwindigkeit der verschiedenen Fließmittel wurde ein Intensivmischer der Fa. Eirich, Typ EL 1 Laboratory mit exzentrisch angeordnetem Mischwerkzeug und geneigtem Mischbehälter gewählt. Die Auswahl des Mischers erfolgte vor dem Hintergrund, dass mit dem Mischer eine zuverlässige und reproduzierbare Herstellung der Zementmörtel möglich ist, die Geschwindigkeit des Mischwerkzeugs variabel angepasst und die elektrische Antriebsleistung während des Mischprozesses erfasst werden kann. Bei dem Mischer wird der Mischbehälter aktiv angetrieben, wodurch das Mischgut zum Mischwerkzeug transportiert wird. Durch die exzentrische Lage des Mischwerkzeugs in Kombination mit dem schrägstehenden Mischbehälter kommt es zu einer weiträumigen Lageveränderung des Mischgutes sowohl vertikal als auch horizontal. Die Neigung des Mischbehälters wirkt außerdem der Entmischung schwerer Partikel in die Außenbereiche entgegen, da das gesamte Mischgut infolge der Schwerkraft ständig in den Mischstrom zurückgeführt wird. Eine Computersteuerung in Verbindung mit einem Frequenzumrichter ermöglicht, die Geschwindigkeit des Mischwerkzeugs stufenlos in einem Bereich von 1 bis 30 m/s zu regeln. Zudem ist während des Mischprozesses die Erfassung und Aufzeichnung der elektrischen Antriebsleistung P am Mischwerkzeug möglich. Die Geschwindigkeit des Mischwerkzeugs wurde bei allen Versuchen mit 4 m/s im Gleichstromprinzip festgelegt. Der Geschwindigkeit des Mischbehälters betrug 1 m/s. Alle Versuche wurden mit einem konstanten Trockenmörtelgewicht von 1 kg durchgeführt.

Um die Beschleunigung der zeitlichen Entfaltung der dispergierenden Wirkung des säuregruppenhaltigen Polymers quantitativ vergleichen zu können, wurde die sogenannte Stabilisationszeit ts anhand der aufgezeichneten Leistungskurve des Mischwerkzeugs berechnet. Der Zahlenwert der Stabilisationszeit ts ist hierbei ein direktes Maß für die zeitliche Entfaltung der dispergierenden Wirkung des säuregruppenhaltigen Polymers. Je kleiner dieser Wert ist, desto schneller ist die zeitliche Entfaltung der dispergierenden Wirkung des säuregruppenhaltigen Polymers.

Die Stabilisationszeit (ts) ist als die Zeit definiert, bei der sich die Leistungskurve des Mischwerkzeugs nach dem Erreichen der maximalen Antriebsleistung der Asymptote annähert. Dabei liegen optimale Werkstoffeigenschaften vor, sobald die Leistungskurve nicht mehr signifikant sinkt.

Durch die Berechnung der Stabilisationszeit lässt sich somit die benötigte Mischzeit bestimmen. Zur Berechnung der Stabilisationszeit wurde die Leistung P auf die maximale Leistung $P_{max}$ normiert (siehe Figur 1). Danach wurde die aufgezeichnete Leistungskurve mit einer mathematischen Funktion approximiert. Dies erfolgte zwischen dem Mischbeginn to und bis zum Erreichen der maximalen Leistung zum Zeitpunkt $t_{max}$ durch lineare Approximation. Exemplarische ist die normierte Mischleistung $P/P_{max}$ und deren Kurvensteigung 0 während des Mischprozesses, anhand derer sich die Stabilisationszeit $t_S$ berechnen lässt in Figur 2 dargestellt. Der anschließende Bereich wurde mit einer abnehmenden Exponentialfunktion (Gleichung 1) angenähert.

$$\frac{P}{P_{\max}} = P_0 + P_1 e^{-\frac{t-t_{\max}}{t_1}} + P_2 e^{-\frac{t-t_{\max}}{t_2}} \qquad \text{(Gleichung 1)}$$

Darin sind Po, $P_1$ und $P_2$ angepasste Leistungsparameter, $t_1$ und $t_2$ angepasste Zeitparameter. Die Stabilisationszeit ts ist als die Zeit definiert, die benötigt wird bis die Kurvensteigung ein Kriterium von $\varepsilon(t_S) = -4 \cdot 10^{-4}\ s^{-1}$ erreicht (siehe hierzu: Chopin, D.; de Larrad, F.; Cazacliu, B.: Why do HPC and SCC require a longer mixing time? Cement and Concrete Research 34, 2004, S. 2237-2243 und Mazanec, O.; Schießl, P.: Mixing Time Optimisation for UHPC. Ultra High Performance Concrete (UHPC). In: Second International Symposium on Ultra High Performance Concrete, March 05-07, 2008, S. 401-408, ISBN: 978-3-89958-376-2).

Beim Erreichen der Stabilisationszeit $t_S$ wiesen alle untersuchten Mörtel optimale Frischmörteleigenschaften auf, was ein Anzeichen für eine vollständige Dispergierung der Ausgangsstoffe ist.

Misch und Prüfablauf

Alle Versuche wurden in einem klimatisierten Raum bei einer Temperatur von 20±2 °C / 65 % relativer Feuchtigkeit durchgeführt. Die trockenen Ausgangsstoffe lagerten in einem Klimaraum bei einer Temperatur von 20±2 °C unter Luftabschluss. Die Temperatur des Anmachwassers wurde so eingestellt, dass am Ende des Mischprozesses die Temperatur des Mischgutes 20±2 °C betrug. Vor der Wasserzugabe wurden die trockenen Ausgangsstoffe (Zement, Quarzsand und pulverförmiges Fließmittel) für 30 s bei einer Werkzeuggeschwindigkeit von 4 m/s homogenisiert. Anschließend wurde das gesamte Anmachwasser über einen Trichter innerhalb von 10 s der Trockenmörtelmischung zugegeben und für 120 s mit den anderen Ausgangsstoffen vermischt. Die angegebenen Stabilisationszeiten beziehen sich immer auf die Nassmischzeit inklusive Wasserzugabe.

Mischungszusammensetzung

Der Zementmörtel der Beispiele I bis X war aus 500 g Zement (CEM I 52.5 R, Typ Milke von HeidelbergCement) und 500 g feinem Quarzsand (Typ H33 von Quarzwerke Frechen) zusammengesetzt. Der Wassergehalt betrug 150 g (*w*/*z*-Wert = 0.30).

Messung der Verzögerungswirkung des Fließmittels mit Wärmeflusskalorimetrie

Die Zementhydratation wurde qualitativ mit isothermer Wärmeflusskalorimetrie (TAM Air Thermostat, Thermometric mit 12 Kanälen) charakterisiert. Die Temperatur im Wärmeflusskalorimeter betrug zu Beginn der Hydratation 20 °C. Zement, Sand und Wasser (w/z-Wert von 0,30) wurden mit dem jeweiligen Additiv für eine Minute im Reagenzglas vermischt. Anschließend wurde das Reagenzglas in den Probenraum des Wärmeflusskalorimeters eingesetzt und die Datenaufnahme gestartet. Die Aufzeichnung der Hydratationsdaten erfolgte über eine Dauer von mindestens 24 Stunden. Zur Auswertung wurde der kumulative Wärmefluss in J/g Zement berechnet. In Tabelle 4 ist der kumulative Wärmefluss nach 12 h dargestellt. Je höher der Wärmefluss ist, desto geringer ist die verzögernde Wirkung des Fließmittels.

Tabelle 3

| Beispiel | Additiv | Additiv in Gew.-% bwoc | Polymer in Gew-% bwoc | Stabilisationszeit $t_s$ [s] | kumulativer Wärmefluss nach 12 h [J/g] | Bemerkung |
|---|---|---|---|---|---|---|
| I | - | 0 | 0 | - | 73,9 | erdfeuchtes Haufwerk, keine Verflüssigung |
| II | V1 | 0,30 | 0,30 | 96 | - | |
| III | V2 | 0,30 | 0,30 | 51 | 52,4 | |
| IV | V4 | 0,63 | 0,30 | 73 | - | |
| V3 | V3A | 0,60 | 0,30 | 35 | 48,7 | |
| VI | V5 | 0,79 | 0,30 | 22 | 75,8 | |
| VII | V6 | 0,83 | 0,30 | 25 | 72,5 | |
| VIII | V7 | 0,62 | 0,30 | 33 | 71,1 | |
| IX | V8 | 0,79 | 0,30 | 31 | 73,4 | |
| X | V9 | 0,79 | 0,30 | 34 | 76,1 | |
| "% bwoc": Menge der Einwaage bezogen auf die Menge an Zement | | | | | | |

Die Menge an Additiv wurde in den Beispielen II bis X so gewählt, dass jeweils die gleiche Mengen Polymer bezogen au dir Menge an Zement eingesetzt wurde.

Tabelle 3 ist zu entnehmen, dass nur dir erfindungsgemäßen Beispiele VI bis X eine Beschleynigung der zeitlichen Entfaltung der dispergierenden Wirkung des säuregrup-penhaltigen Polymers, hier eines Polycarboxylatethers, nach Zugabe des Anmachwassers, erkennbar an den geringen Werten für ts und gleichzeitig eine nachfolgend beschleunigte Härtung der Mischung, welche über den kumulativen Wärmefluss nach 12 Stunden gemessen wurde, ermöglichen.

## Patentansprüche

**1.** Zusammensetzung umfassend

| | |
|---|---|
| 5 - 50 Gew.-% | Calciumsilikat-Hydrat, |
| 10 - 60 Gew.-% | mindestens eines wasserlöslichen, säuregruppenhaltigen Polymers, umfassend Polyethergruppen, |
| 5 - 40 Gew.-% | mindestens eines Polyalkylenglycolethers der Formel (1) |

$$R^{\alpha}\text{-}(C_{\beta}H_{2\beta}O)_{\omega}\text{-}H \qquad (1)$$

wobei

$R^{\alpha}$ für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen, wobei der Arylrest keine Säuregruppen umfasst und
$\beta$ unabhängig voneinander für jede ($C_{\beta}H_{2\beta}O$)-Einheit gleich oder verschieden 2, 3, 4 oder 5 und
$\omega$ für 3 bis 200 steht.

**2.** Zusammensetzung nach Anspruch 1, **dadurch gekennzeichnet, dass** es sich bei den Polyethergruppen des mindestens einem wasserlöslichen, säuregruppenhaltigen Polymers um Polyethergruppen der Struktureinheit (I),

$$*\text{-U-(C(O))}_k\text{-X-(AlkO)}_n\text{-W} \qquad (I)$$

wobei

* die Bindungsstelle an das säuregruppenhaltige Polymer anzeigt,
U für eine chemische Bindung oder eine Alkylengruppe mit 1 bis 8 C-Atomen steht,
X Sauerstoff, Schwefel oder eine Gruppe $NR^1$ bedeutet,
k 0 oder 1 ist,
n für eine ganze Zahl steht, deren Mittelwert, bezogen auf das säuregruppenhaltige Polymer im Bereich von 3 bis 300 liegt,
Alk für $C_2$-$C_4$-Alkylen steht, wobei Alk innerhalb der Gruppe $(Alk\text{-}O)_n$ gleich oder verschieden sein kann,
W einen Wasserstoff-, einen $C_1$-$C_6$-Alkyl- oder einen Arylrest bedeutet oder die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe $R^2$ aufweisen können, und wobei 1 oder 2 Kohlenstoffringglieder als Carbonylgruppe vorliegen können,
$R^1$ für Wasserstoff, $C_1$-$C_4$-Alkyl oder Benzyl steht, und
$R^2$ für Wasserstoff, $C_1$-$C_4$-Alkyl oder Benzyl steht,

handelt.

**3.** Zusammensetzung nach Anspruch 1 oder 2, **dadurch gekennzeichnet, dass** es sich bei der Säuregruppe des wasserlöslichen Polymers um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handelt.

**4.** Zusammensetzung nach Anspruch 1 oder 2, **dadurch gekennzeichnet, dass** das wasserlösliche, säuregruppenhaltige Polymer, umfassend Polyethergruppen, ein Polykondensationsprodukt darstellt, enthaltend

(II) eine einen Aromaten oder Heteroaromaten und eine Polyethergruppe aufweisende Struktureinheit,
(III) eine phosphatierte einen Aromaten oder Heteroaromaten aufweisende Struktureinheit.

**5.** Zusammensetzung nach Anspruch 4, **dadurch gekennzeichnet, dass** die Struktureinheiten (II) und (III) durch folgende allgemeine Formeln repräsentiert werden

$$(II) \qquad \text{A-U-(C(O))}_k\text{-X-(AlkO)}_n\text{-W}$$

mit
A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen;

(III)

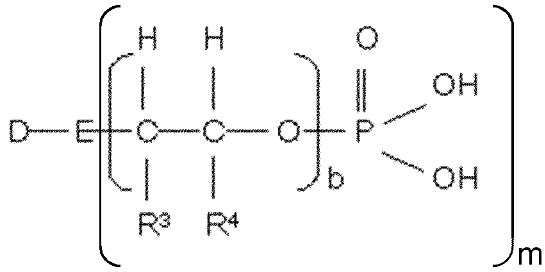

mit
D gleich oder verschieden sowie repräsentiert durch eine substituierte oder unsubstituierte aromatische oder heteroaromatische Verbindung mit 5 bis 10 C-Atomen im aromatischen System
mit
E gleich oder verschieden sowie repräsentiert durch N, NH oder O
mit
m = 2 falls E = N und m = 1 falls E = NH oder O
mit
$R^3$ und $R^4$ unabhängig voneinander gleich oder verschieden sowie repräsentiert durch einen verzweigten oder unverzweigten $C_1$- bis $C_{10}$-Alkylrest, $C_5$- bis $C_8$-Cycloalkylrest, Arylrest, Heteroarylrest oder H
mit b
gleich oder verschieden sowie repräsentiert durch eine ganze Zahl von 0 bis 300.

6. Zusammensetzung nach Anspruch 4 oder 5, **dadurch gekennzeichnet, dass** das Polykondensationsprodukt eine weitere Struktureinheit (IV) enthält, welche durch folgende Formel repräsentiert wird

(IV)

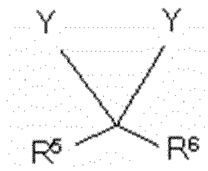

mit
Y unabhängig voneinander gleich oder verschieden und repräsentiert durch (II), (III) oder weitere Bestandteile des Polykondensationsproduktes.

7. Zusammensetzung nach Anspruch 1 oder 2, **dadurch gekennzeichnet, dass** das wasserlösliche, säuregruppenhaltige Polymer, umfassend Polyethergruppen, mindestens ein Copolymer darstellt, welches erhältlich ist durch Polymerisation einer Mischung von Monomeren, umfassend

(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(VI) mindestens ein ethylenisch ungesättigtes Monomer mit einer Polyethergruppe.

8. Zusammensetzung nach Anspruch 7, **dadurch gekennzeichnet, dass** das ethylenisch ungesättigte Monomer (V) durch mindestens eine der folgenden allgemeinen Formeln aus der Gruppe (Va), (Vb) und (Vc) repräsentiert wird

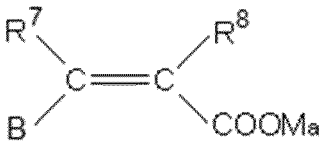 (Va) 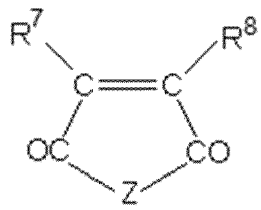 (Vb)

wobei

$R^7$ und $R^8$ unabhängig voneinander für Wasserstoff oder einen aliphatischen Kohlenwasserstoffrest mit 1 bis 20 C-Atomen
B für H, $-COOM_a$, $-CO-O(C_qH_{2q}O)_r-R^9$, $-CO-NH-(C_qH_{2q}O)_r-R^9$
M für Wasserstoff, ein ein-, zwei- oder dreiwertiges Metallkation, Ammoniumion oder einen organischen Aminrest
a für 1/3, 1/2 oder 1
$R^9$ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede $(C_qH_{2q}O)$-Einheit gleich oder verschieden 2, 3 oder 4 und
r für 0 bis 200
Z für O, $NR^{16}$
$R^{16}$ unabhängig voneinander gleich oder verschieden sowie repräsentiert durch einen verzweigten oder unverzweigten $C_1$- bis $C_{10}$-Alkylrest, $C_5$-bis $C_8$-Cycloalkylrest, Arylrest, Heteroarylrest oder H

stehen,

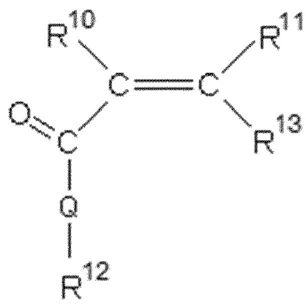 (Vc)

mit

$R^{10}$ und $R^{11}$ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
$R^{12}$ gleich oder verschieden sowie repräsentiert durch $(C_nH_{2n})-SO_3H$ mit n = 0, 1, 2, 3 oder 4, $(C_nH_{2n})-OH$ mit n = 0, 1, 2, 3 oder 4; $(C_nH_{2n})-PO_3H_2$ mit n = 0, 1, 2, 3 oder 4, $(C_nH_{2n})-OPO_3H_2$ mit n= 0, 1, 2, 3 oder 4, $(C_6H_4)-SO_3H$, $(C_6H_4)-PO_3H_2$, $(C_6H_4)-OPO_3H_2$ und $(C_nH_{2n})-NR^{14}_b$ mit n = 0, 1, 2, 3 oder 4 und b = 2 oder 3
$R^{13}$ für H, $-COOM_a$, $-CO-O(C_qH_{2q}O)_r-R^9$, $-CO-NH-(C_qH_{2q}O)_r-R^9$, wobei $M_a$, $R^9$, q und r oben genannte Bedeutungen besitzen
$R^{14}$ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.
Q gleich oder verschieden sowie repräsentiert durch NH, $NR^{15}$ oder O; wobei $R^{15}$ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

**9.** Zusammensetzung nach einem der Ansprüche 1 bis 8, **dadurch gekennzeichnet, dass** die Zusammensetzung als Pulver vorliegt.

**10.** Zusammensetzung nach einem der Ansprüche 1 bis 9, **dadurch gekennzeichnet, dass** das molare Verhältnis von

Calcium zu Silicium im Calciumsilikat-Hydrat 0,6 bis 2,0 beträgt.

**11.** Zusammensetzung nach einem der Ansprüche 1 bis 10, **dadurch gekennzeichnet, dass** in Formel (1) des Polyalkylenglycolethers

$R^{\alpha}$ für einen aliphatischen Kohlenwasserstoffrest mit 1 bis 4 C-Atomen,
$\beta$ unabhängig voneinander für jede $(C_{\beta}H_{2\beta}O)$-Einheit gleich oder verschieden 2 oder 3 und
$\omega$ für 8 bis 100 steht.

**12.** Verfahren zur Herstellung einer Zusammensetzung nach einem der Ansprüche 1 bis 11, **dadurch gekennzeichnet, dass** eine wasserlösliche Calciumverbindung mit einer wasserlöslichen Silikatverbindung umgesetzt wird, wobei die Umsetzung der wasserlöslichen Calciumverbindung mit der wasserlöslichen Silikatverbindung in Anwesenheit von Wasser erfolgt, welches das mindestens eine erfindungsgemäße säuregruppenhaltige Polymer zumindest teilweise umfasst.

**13.** Verfahren nach Anspruch 12, **dadurch gekennzeichnet, dass** das molare Verhältnis von Calcium zu Silizium 0,6 bis 2,0 beträgt.

**14.** Mischung, umfassend ein zementäres Bindemittel und 0,01 bis 10 Gew.-% einer Zusammensetzung nach einem der Ansprüche 1 bis 11, bezogen auf die Gesamtmasse der Mischung.

**15.** Verwendung einer Zusammensetzung nach Anspruch 1 bis 11 in einer pulverförmigen Mischung, umfassend ein zementäres Bindemittel, zur Beschleunigung der zeitlichen Entfaltung der dispergierenden Wirkung des säuregruppenhaltigen Polymers nach Zugabe des Anmachwassers und einer nachfolgend beschleunigten Härtung der Mischung.

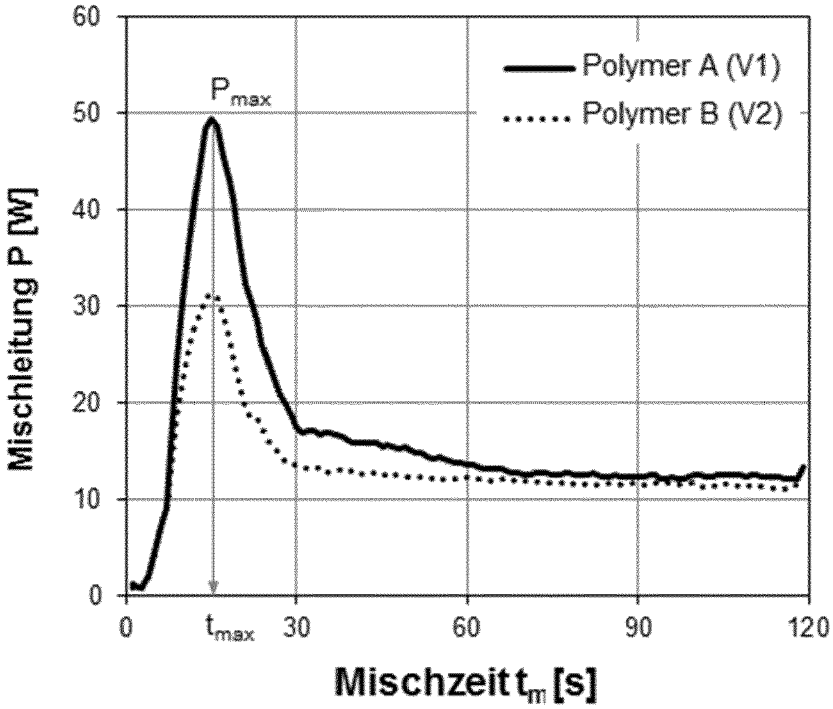

60
50
40
30
20
10
0
Mischleitung P [W]
P max
Polymer A (V1)
Polymer B (V2)
0
t max
30
60
90
120
Mischzeit t m [s]


Figur 1

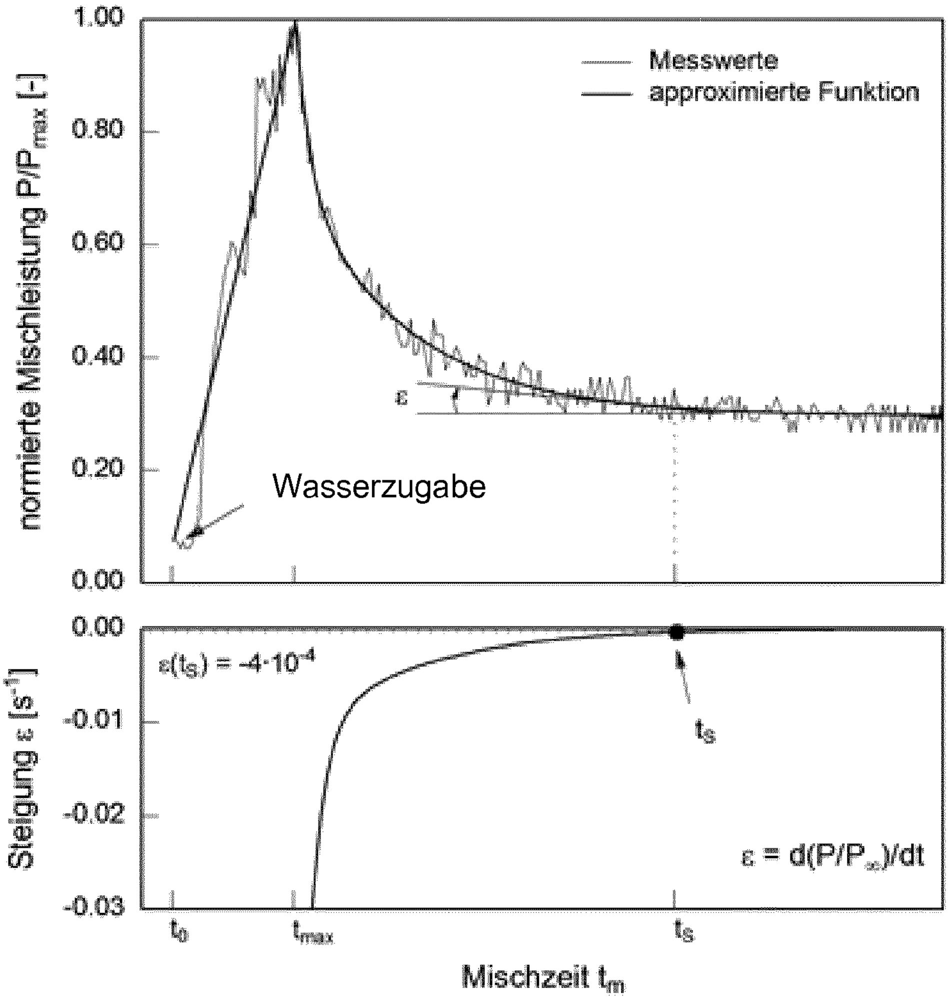
Messwerte
approximierte Funktion
normierte Mischleistung P/P_max [-]
1.00
0.80
0.60
0.40
0.20
0.00
ε
Wasserzugabe
Steigung ε [s^-1]
0.00
-0.01
-0.02
-0.03
ε(t_S) = -4·10^-4
t_S
ε = d(P/P_∞)/dt
t_0
t_max
t_S
Mischzeit t_m

Figur 2

Europäisches Patentamt
European Patent Office
Office européen des brevets

# EUROPÄISCHER RECHERCHENBERICHT

Nummer der Anmeldung
EP 14 17 1521

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X,D<br><br><br>A | EP 2 574 636 A1 (BASF CONSTR POLYMERS GMBH [DE] BASF CONSTRUCTION SOLUTIONS GMBH [DE]) 3. April 2013 (2013-04-03)<br>* das ganze Dokument *<br>----- | 14<br><br><br>1-13,15 | INV.<br>C04B28/02<br>C04B40/00 |
| A,D | WO 2010/026155 A1 (CONSTR RES & TECH GMBH [DE]; NICOLEAU LUC [DE]; JETZLSPERGER EVA [DE];) 11. März 2010 (2010-03-11)<br>* das ganze Dokument *<br>----- | 1-15 | |
| A | EP 0 607 389 A1 (SANDOZ LTD [CH] MBT HOLDING AG [CH])<br>27. Juli 1994 (1994-07-27)<br>* das ganze Dokument *<br>----- | 1-15 | |
| A | US 2005/124737 A1 (INOUE KAZUMASA [JP] ET AL) 9. Juni 2005 (2005-06-09)<br>* das ganze Dokument *<br>----- | 1-15 | |
| | | | RECHERCHIERTE SACHGEBIETE (IPC) |
| | | | C04B |

1

Der vorliegende Recherchenbericht wurde für alle Patentansprüche erstellt

| Recherchenort | Abschlußdatum der Recherche | Prüfer |
|---|---|---|
| München | 9. Dezember 2014 | Gattinger, Irene |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 14 17 1521

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-12-2014

| Im Recherchenbericht angeführtes Patentdokument | Datum der Veröffentlichung | Mitglied(er) der Patentfamilie | Datum der Veröffentlichung |
|---|---|---|---|
| EP 2574636 A1 | 03-04-2013 | CA 2850247 A1 | 04-04-2013 |
| | | CN 103857712 A | 11-06-2014 |
| | | EP 2574636 A1 | 03-04-2013 |
| | | US 2014235760 A1 | 21-08-2014 |
| | | WO 2013045419 A1 | 04-04-2013 |
| WO 2010026155 A1 | 11-03-2010 | AU 2009289267 A1 | 11-03-2010 |
| | | CA 2735705 A1 | 11-03-2010 |
| | | CN 102216234 A | 12-10-2011 |
| | | DE 202009017741 U1 | 20-05-2010 |
| | | EP 2321235 A1 | 18-05-2011 |
| | | EP 2664595 A2 | 20-11-2013 |
| | | EP 2664596 A2 | 20-11-2013 |
| | | JP 2012501293 A | 19-01-2012 |
| | | RU 2011112305 A | 10-10-2012 |
| | | TW 201016629 A | 01-05-2010 |
| | | US 2011269875 A1 | 03-11-2011 |
| | | WO 2010026155 A1 | 11-03-2010 |
| EP 0607389 A1 | 27-07-1994 | AT 398965 B | 27-02-1995 |
| | | AU 674866 B2 | 16-01-1997 |
| | | CA 2119007 A1 | 03-02-1994 |
| | | CH 686780 A5 | 28-06-1996 |
| | | CN 1084836 A | 06-04-1994 |
| | | CZ 9400650 A3 | 16-11-1994 |
| | | DE 4324334 A1 | 27-01-1994 |
| | | DK 0607389 T3 | 06-04-1998 |
| | | EP 0607389 A1 | 27-07-1994 |
| | | ES 2113544 T3 | 01-05-1998 |
| | | GR 3026337 T3 | 30-06-1998 |
| | | JP 3423716 B2 | 07-07-2003 |
| | | JP H06511228 A | 15-12-1994 |
| | | KR 100273606 B1 | 15-01-2001 |
| | | MX 190112 B | 21-10-1998 |
| | | NO 941006 A | 20-05-1994 |
| | | PL 302918 A1 | 05-09-1994 |
| | | SG 43970 A1 | 14-11-1997 |
| | | TR 26789 A | 08-08-1994 |
| | | TW 233291 B | 01-11-1994 |
| | | US 5494516 A | 27-02-1996 |
| | | US 5609681 A | 11-03-1997 |
| | | WO 9402428 A1 | 03-02-1994 |
| US 2005124737 A1 | 09-06-2005 | JP 4057446 B2 | 05-03-2008 |
| | | JP 2004262715 A | 24-09-2004 |
| | | US 2005124737 A1 | 09-06-2005 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 14 17 1521

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-12-2014

| Im Recherchenbericht angeführtes Patentdokument | Datum der Veröffentlichung | Mitglied(er) der Patentfamilie | Datum der Veröffentlichung |
|---|---|---|---|

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3530258
- DE 2948698
- WO 0196007 A
- DE 19513126
- DE 19834173
- US 2009312460 A
- DE 19905488
- WO 2006027363 A
- WO 2006042709 A
- EP 2574636 A
- WO 2010040612 A
- WO 2010026155 A
- WO 2011026720 A
- WO 2011029711 A
- EP 2014051494 W
- EP 2014051485 W
- EP 2574636 A1


### In der Beschreibung aufgeführte Nicht-Patentliteratur


- **CHOPIN, D. ; DE LARRAD, F. ; CAZACLIU, B.** Why do HPC and SCC require a longer mixing time?. *Cement and Concrete Research,* 2004, vol. 34, 2237-2243
- **MAZANEC, O.** Charakterisierung der Mischzeit und des rheologischen Verhaltens ultrahochfester Betone unter Einbeziehung interpartikulärer Wechselwirkungen, Dissertation. *Technische Universität München,* 2013
- **MAZANEC, O. ; SCHIEßL, P.** Mixing Time Optimisation for UHPC. Ultra High Performance Concrete (UHPC). *Second International Symposium on Ultra High Performance Concrete,* 05. Marz 2008, ISBN 978-3-89958-376-2, 401-408
- **SCHIEßL, P. ; MAZANEC, O. ; LOWKE, D.** SCC and UHPC - Effect of Mixing Technology on Fresh Concrete Properties. *Advances in Constructions Materials 2007, Symposium to honor H.W. Reinhardt, University of Stuttgart,* 23. Juli 2007